(19) Europäisches Patentamt
European Patent Office
Office européen des brevets

(11) **EP 2 544 153 A1**

(12) **EUROPEAN PATENT APPLICATION**

(43) Date of publication:
**09.01.2013 Bulletin 2013/02**

(51) Int Cl.:
*G07C 9/00* (2006.01)          *G06F 21/00* (2013.01)
*G06K 9/00* (2006.01)          *G06F 3/041* (2006.01)

(21) Application number: **11172483.7**

(22) Date of filing: **04.07.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ZF Friedrichshafen AG
88038 Friedrichshafen (DE)**

(72) Inventor: **Wilhelm, Siegfried E.
82131 Stockdorf (DE)**

(54) **Identification technique**

(57)     A technique for user identification based on a user input is provided. As to one aspect of the technique, a device (100) comprises a pattern generator (102), a user interface (104), and a transmitter (106). The pattern generator (102) is adapted to generate a pattern ($Y_0$, $Y_1$, ..., $Y_n$). The user interface (104) is adapted to correlate the pattern and the user input. The transmitter (106) is adapted to transmit a signal ($X_0$, $X_1$, ..., $X_m$) indicative of a result of the correlation to a receiver (108).

Fig. 1

**Description**

**Technical Field**

The present disclosure relates to a technique for user identification. In particular, the disclosure relates to a device for local and/or remote user identification based on a user input.

**Background**

Communication increasingly uses networks that are open, such as the Internet, or channels that are accessible, at least on a physical layer, such as wireless links. Most often, unilateral or mutual identification of communication partners is a requirement for a subsequent communication between the communication partners. As an example of business-to-business and commercial communication, contracting requires certainty on the contracting partner. In information technology and military, identification is a prerequisite of authorization.

Information technology has considered a plurality of mechanisms for remote user identification over communication networks and physically accessible channels. An exemplary problem is eavesdropping on a communication channel used for identification, which may enable an attacker to misuse intercepted data. The considered mechanisms include quantum communication that is expected to prevent a man-in-the-middle attack, however requires very specific (e.g., optical) communication lines and additional hardware at each of the communication partners. The additional requirements can, at least at present, impede mobile applications requiring a compact user terminal. Also, quantum communication is not expected to be compatible with existing Internet communication infrastructure.

Regarding the case of local user identification, such as a login process, a conventional approach relies on a local machine processing the identification not being tampered. However, malware infections of the local machine can bypass access limitations, or spyware can locally eavesdrop account data as it is entered by the user.

**Summary**

It is an object to provide an identification technique for user identification that allows at least partially using existing infrastructure.

According to a first aspect, a device for user identification based on a user input is provided. The device comprises a pattern generator adapted to generate a pattern; a user interface adapted to correlate the pattern and the user input; and a transmitter adapted to transmit a signal indicative of a result of the correlation to a receiver.

As used herein, the terms "correlation" and "correlating" may encompass a cross-correlation between the pattern and the user input. There may be no time-lag between the pattern and the user input. The pattern and the user input may be cross-correlated in real-time.

As the user interface is adapted to correlate the pattern and the user input, the correlation result may provide a secure form of handling, processing, and/or communicating the user input. The correlation result may be directly output by the user interface. Manipulating the device, tapping a communication inside or outside the device, or eavesdropping the transmission may be futile as data processed in the device or transmitted outside the device may be the correlation result (or any data derived from the correlation result).

At least one of a remote user identification and a remote user authentication may be based on the transmitted correlation result. The result of the correlation may be transmitted over a secure channel or over an insecure channel.

The generated pattern may be altered, modified or modulated by the user interface according to the user input. The result of the correlation may be a signal composed of the pattern and the user input. The composed signal may entangle the pattern and the user input, such that a third party (attacker) cannot distinguish the (originally) generated pattern from the correlation result. The pattern generator may generate a pseudorandom pattern or a true random pattern. The correlation result may also be a pseudorandom pattern or a true random pattern, respectively.

The pattern and the user input may be correlated in the analog domain. Alternatively or in addition, the pattern and the user input may be correlated based on one or more physical processes. Preferably, the pattern and the user input are correlated by direct physical interaction in the analog domain. The physical process may comprise any change to the pattern directly affected by the user input. The user input may directly act on the pattern. Directly may encompass that no processing and/or no logic of the device is involved in the correlation. The correlation may occur external to the device. The user input may not need to enter the device as plaintext (i.e., uncorrelated) or may not need to be processed and/or communicated as plaintext (at any point or stage in the device).

The physical process may be based on the pattern represented by at least one of a light intensity pattern, a distribution of electric charge, a spatiotemporal pattern of electric current, a pattern of an electric field, and a pattern of a magnetic field. The correlation by the physical process may include at least one of reflection of light, scattering of light, change in electrical resistance, change in connectivity, local induction of strain, local force causing a surface deformation, local induction of mechanical stress, and induction of electric charges.

The correlation may be based on an exclusive disjunction (i.e., exclusive or, also referred to as "XOR"). The correlation may be based on a (logical) conjunction (also referred to as "AND"). Alternatively or in addition, the correlation may be based on at least one of an amplitude addition, an amplitude multiplication, an addition of phases of the pattern and the user input, or a complex-valued multiplication.

The pattern may be generated based on an algorithm. The pattern generator or the algorithm may be initialized by one or more parameters. The one or more parameters, or a representation of the algorithm, may be securely transmitted to the receiver. The one or more parameters, or the representation of the algorithm, may be transmitted on a channel separate from a channel of the signal transmission. The channel for the parameter transmission may be more secure than the channel for the signal transmission. The algorithm may be a pseudorandom generator. The receiver or another component coupled to the receiver may be adapted to perform the same or an equivalent algorithm. The receiver may be adapted to generate an identical pattern or a counter-pattern. Alternatively or in addition, the generated pattern may be securely transmitted to the receiver.

The user interface may comprise a touchpad and the user input may be a gesture on the touchpad. The gesture may comprise at least one of a two-dimensional pattern and a temporal pattern. The two-dimensional pattern may be a curve on a user input field of the touchpad. The temporal pattern may be represented by a sequence of points (and velocities) on the curve. Each point may include a time stamp. The gesture may comprise one, two, or more input curves. Each of the input curves may correspond to a user finger contacting the user input field.

The touchpad may comprise a first edge and a second edge (on the user input field). The touchpad may be adapted to receive a plurality of input signals on the first edge. The plurality of input signals may represent the generated pattern. The touchpad may be further adapted to output a plurality of output signals on the second edge. The touchpad may be adapted to correlate the plurality of input signals and the gesture (on the user input field). The plurality of output signals may represent the result of the correlation. The first edge and the second edge may be essentially perpendicular.

The plurality of input signals may be discretized along the first edge. The plurality of output signals may be discretized along the second edge. A pair of one input signal and one output signal may correspond to an input area or input point in the user input field.

The touchpad may be a resistive touchpad. The plurality of input signals (representing the pattern) may be correlated with the gesture (representing the user input) by voltage division.

Alternatively or in addition, the user interface may comprise a projector adapted to project the pattern towards a user. The projector may be adapted to encode the generated pattern in projected light. The user interface may further comprise a camera adapted to detect light induced by the projection. The detected light may be a reflection or a scattering of light from the user and/or caused by the pattern.

A manufacturing characteristic of the user interface may watermark the correlation result. The watermarking may be unique to the user interface. Each device in a tranche of devices may have a unique characteristic (or watermark). The characteristic may be an electrical resistance or an electrical resistivity of the resistive touchpad. Alternatively or in addition, the characteristic may be a photoelectric response characteristic of a Charge-Coupled Device (CCD) in the camera of the user interface.

According to a second aspect, a device for user identification based on a user input is provided. The device comprises a pattern generator adapted to generate a pattern; a receiver adapted to receive a signal indicative of a result of a correlation based on the user input; and a decorrelator adapted to decorrelate the signal using the pattern to retrieve the user input.

At least one of a remote user identification and a remote user authentication may be based on a result of the decorrelation. The signal may be received over a secure channel or over an insecure channel. The signal may be a correlation of the pattern and the user input.

The pattern generator may comprise any one of the features mentioned for the first aspect. The signal may be a result of the correlation mentioned for the first aspect. The decorrelator may decorrelate the signal and the pattern by correlating the signal and the pattern, in the case the correlation uses an exclusive disjunction or any other involutary operation (i.e., an involution, wherein the pattern is a parameter of the involution). Alternatively or in addition, the decorrelator may decorrelate the signal and the pattern by subtracting (or dividing) the signal and the pattern, in the case the correlation is based on an addition (or a multiplication, respectively).

The decorrelation may be based on one or more physical processes or a simulation of the one or more physical processes. The decorrelation can be based on the same physical process or a simulation of the same physical process that is used to correlate the pattern and the user input (i.e., that is used to generate the signal).

The receiver may further be adapted to securely receive one or more parameters of the pattern generation or a representation of an algorithm of the pattern generation. The parameters may be received over a channel separate from a channel of the signal reception. The channel for parameter reception may be more secure than the channel for signal reception. The receiver may further be adapted to initialize the pattern generator according to the received one or more parameters, or the representation of the algorithm. Alternatively or in addition, the receiver may further be adapted to securely receive the pattern (e.g., over a separate secure channel).

According to a third aspect, a device for user identification based on a user input is provided. The device comprises a pattern generator adapted to generate a pattern; a user interface adapted to correlate the pattern and the user input; and a decorrelator adapted to decorrelate a result of the correlation using the pattern to retrieve the user input.

At least one of a local user identification and a local user authentication may be based on a result of the decorrelation. The correlation result may be communicated in the device on a secure line (e.g, a line in an encapsulated or shielded domain) or an insecure line (e.g, a line in an open or accessible domain). The user input may not need to be processed and/or communicated as plaintext at any point or stage in the device, particularly if the correlation is performed directly in the user interface, in the analog domain, or by means of one or more physical processes.

The same pattern generator may provide the pattern to both the user interface and the decorrelator. The device may further comprise any one of the features mentioned for the first aspect or the second aspect.

Any one of the afore-mentioned devices may further comprise a housing. An interior of the housing may be enclosed by one or more intrusion detecting foils. One or each of the intrusion detecting foils may have a first edge and a second edge. The first edge may be connected to the pattern generator. The second edge may be connected to at least one of the transmitter and the decorrelator.

## Brief Description of the Drawings

In the following, the disclosure will be described with reference to exemplary embodiments illustrated in the drawings, wherein:

Fig. 1    schematically illustrates a first embodiment of a device for user identification;

Fig. 2    schematically illustrates a resistive touch foil for a user interface according to a second embodiment combinable with the device of Fig. 1;

Fig. 3    schematically illustrates optical components for a user interface according to a third embodiment combinable with the device of Fig. 1; and

Fig. 4    schematically illustrates polarizing components for a user interface according to a second embodiment combinable with the device of Fig. 1.

## Description of Preferred Embodiments

In the following, for purposes of explanation and not limitation, specific details are set forth, such as particular topologies, connectivities, interfaces and configurations, in order to provide a thorough understanding of the disclosure. It will be apparent to one skilled in the art that the disclosure may be practiced in other embodiments that depart from these specific details. For example, while the embodiments will be described with reference to an Internet communication, it will be apparent to the skilled person that the invention can also be practiced by means of mobile telecommunication networks. Furthermore, the invention can be implemented in a distributed manner by means of a communication network and/or as part of a communication network. The concept of remote user identification may be implemented in the communication network such that one or more of the devices disclosed herein are comprised in or form nodes of the communication network.

Moreover, those skilled in the art will appreciate that the functions, services and processes explained herein may be implemented using software functioning in conjunction with a programmed microprocessor and/or using an Application Specific Integration Circuit (ASIC) or a general purpose computer. It will also be appreciated that, while the following embodiments will primarily be described in the context with devices, the invention may also be embodied in a corresponding method or in a computer program product as well as in a system comprising a computer processor and a memory coupled to the processor, wherein the memory is encoded with one or more programs that may perform the services, functions or method steps disclosed herein.

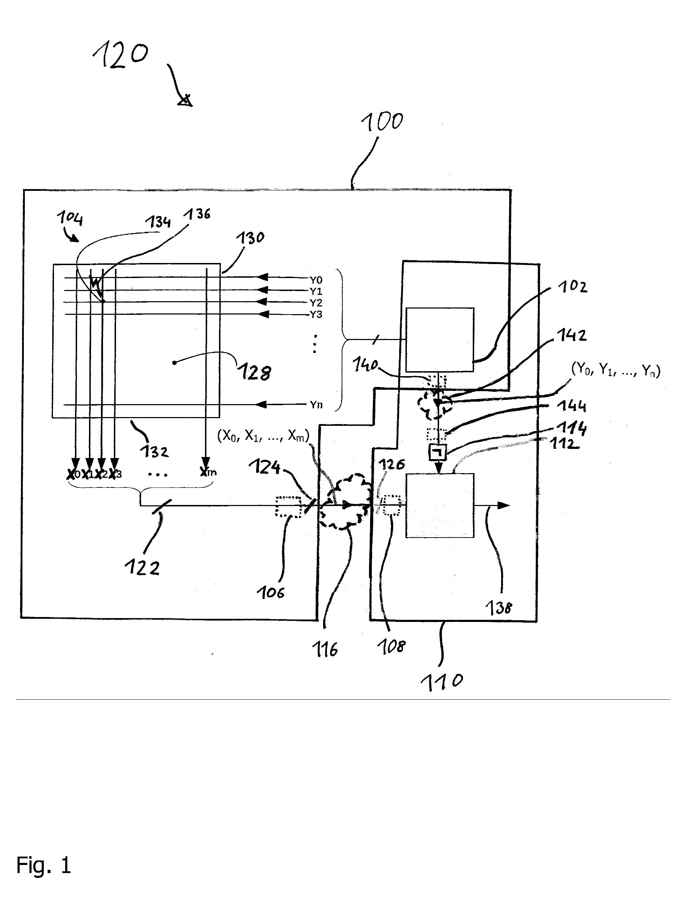

Fig. 1 schematically illustrates an embodiment of a device 100 for user identification. The device comprises a pattern generator 102, a user interface 104, and a transmitter 106. The pattern generator 102 is adapted to generate a pattern represented by a plurality of input signals $Y_0$, $Y_1$, ..., $Y_n$. The input signals $Y_0$, $Y_1$, ..., $Y_n$ are input to the user interface 104, which outputs a plurality of output signals $X_0$, $X_1$, ..., $X_m$. The user interface 104 is adapted to correlate the pattern represented by the plurality of input signals $Y_0$, $Y_1$, ..., $Y_n$ and a user input. The transmitter 106 is coupled to the user interface. The transmitter 106 is adapted to transmit a result of the correlation as represented by the output signals $X_0$, $X_1$, ..., $X_m$ to a receiver 108.

Fig. 1 further schematically illustrates a device 110 for user identification. The device 110 comprises the pattern generator 102, a receiver 108 and a decorrelator 112. The pattern generator 102 is adapted to generate a pattern represented by a plurality of input signals $Y_0, Y_1, ..., Y_n$. The plurality of input signals $Y_0, Y_1, ..., Y_n$ is input to an inverter 114. The receiver 108 is adapted to receive a signal $X_0, X_1, ..., X_m$. The signals $X_0, X_1, ..., X_m$ are composed of the generated pattern $Y_0, Y_1, ..., Y_n$ and a user input. The decorrelator 112 is coupled to the receiver 108 and the inverter 114. The decorrelator 112 is adapted to decorrelate the signals $X_0, X_1, ..., X_m$ and the pattern $Y_0, Y_1, ..., Y_n$. A result of the decorrelation is the user input, provided that both the pattern $Y_0, Y_1, ..., Y_n$ and the received signals $X_0, X_1, ..., X_m$ used in the decorrelation exactly coincide with the pattern and the result of the correlation, respectively. The coincidence requires equivalence up to a common scaling factor. The correlation and decorrelation are inverse operations that cooperate discontinuously in that a minute deviation of any one of the pattern and the received signals $X_0, X_1, ..., X_m$ leads to a decoding result, which completely deviates from the user input.

The devices 100 and 110 communicate via a packet-switched network 116, such as the Internet, for a remote user identification. The pattern generator 102, in each of the devices 100 and 110 in communication, generates a corresponding pattern synchronously (up to a delay at the device 110 due to a communication time).

In an embodiment of a device 120 for user identification, components of the devices 100 and 110 are collocated. A user of the device 120 can be identified locally by the device 120. The device 120 integrates in a single housing the components described for the devices 100 and 110. A pair of transmitter and receiver is omitted (as indicated by dotted lines in Fig. 1). The device 120 comprises a pattern generator 102, a user interface 104, a transmitter 106, a receiver 108, and a decorrelator 112. The components of the device 120 are adapted and configured as described with reference to the devices 100 and 110. The pattern generator 102 is shared. In other words, the pattern generator 102 outputs the pattern represented by the plurality of input signals $Y_0, Y_1, ..., Y_n$ to both the user interface 104 and the decorrelator 112 via an inverter 114.

The components of each of the devices 100, 110, 120 are switchably coupled via switchers 122, 124, and 126. One supervising unit is provided in each of the devices 100, 110, 120 and adapted to selectively enable and disable signal transmission via the switchers 122, 124, and 126, respectively. Further features of components and operations of the device 100 and of the device 110 are described in more detail below. A corresponding description applies to the device 120.

The input signals $Y_i(t)$ are provided by the pattern generator 102 according to a pseudorandom generator algorithm. The input signals $Y_i(t)$ vary with time t. The input signals $Y_i(t)$ have at least one of a random amplitude, a random phase and a random frequency. In an advanced variant, the input signals $Y_i(t)$ and the output signals $X_j(t)$ are generated, correlated and decorrelated by means of fiber-optics. The generated pattern is represented by optical input signals $Y_i(t)$. The optical input signals $Y_i(t)$ have, in addition, a random polarization state.

In general, the generation of the pattern may involve one or more of the following parameters: Amplitude, phase, frequency of the pattern and a sample rate provided by means of the pattern to the user interface 104. By example, the time dependence of the input signals $Y_i(t)$ may be a Poisson process. In addition, the correlation of the generated pattern and the user input may involve one or more of the following degrees of freedom: a shape of the user input (e.g., in two or three dimensions), a dynamic component of the user input (e.g., course in time) and variations that individualize the user interface 104. By example, the variation (also referred to as characteristic) that is unique for the individual user interface 104 may be a specific resistance of a component or a transfer function of a semiconductor component (such as an CCD).

The pattern generator 102 applies a Random Number Generator (RNG). A plurality of computational or algorithmic RNGs are known in the art. Such deterministic RNGs are also referred to as Pseudo-RNGs (or PRNGs), because of a finite periodicity of the generated patterns. The periodicity is very large and depends exponentially on a PRNG register length. In an advanced variant, the pattern generator 102 applies physical methods in a Hardware Random Number Generator (or HRNG). The HRNG comprises a detector for radioactive decay or thermal noise. The HRNG preferably further comprises an autonomous source for radioactive decay or thermal noise, respectively.

The user interface 104 is a touchpad including a user input field 128. The user input field 128 comprises a matrix of linear dimension n in a first direction and linear dimension m in a second direction. The user input field 128 includes an input contact bar along a first edge 130 in the first direction. The user interface 128 further comprises an output contact bar along a second edge 132 in the second direction. The input signals $Y_i(t)$ are input to the input contact bar along the first edge. The output signals $X_j(t)$ are output at the output contact bar along the second edge 132.

In a variant, the user interface 104 comprises concentric annuli that are radially segmented. I.e., user input field 128 is tessellated in a manner of polar coordinates. The first direction is a circumferential direction. The first direction is represented by an angular variable or azimuth, phi. The second direction is a radial direction and represented by a radius variable, r. The user interface 104 is excited at the outer circumference of the user input field 128 (i.e., at the annulus r=m). The excitations propagate radially inwards to the center of the user input field 128. The center is the origin of the polar coordinates (i.e., r=0). In other words, each of the input signals $Y_i(t)$ is applied to the outermost annulus (r=m) at a different one of the angles $phi_0, ..., phi_n$. The output signals $X_j(t)$ are tapped along the second direction. Preferably, an output contact bar is provided along the ray phi=0. Each of the output signals $X_j(t)$ is tapped at phi=0 and a different one of the radii $r_0, ..., r_m$.

A spatial resolution of the user interface 104 on the user input field 128 is discretized along the first direction and the second direction such that the user input field 128 comprises a plurality of input points 134. Each of the plurality of input points is associated to a pair (i, j) of one of the input signals $Y_i$ and one of the output signals $X_j$. The input points 134 are arranged in a rectangular lattice. In a variation of the embodiment shown in Fig. 1, the input points 134 form nodes of a hexagonal lattice or any other two-dimensional lattice structure. The first direction and the second direction coincide with a first basis vector and a second basis vector of the lattice structure, respectively.

The user input field is adapted to modify the input signal $Y_i$ in response to a user actuation 136 at the input point 134 indicated by the pair (i, j), and to output the modified input signal $Y_i$ as the output signal $X_j$. A preferred dimension of the user input field 128 comprises a number of (n + 1) = 7 input signals and a number of (m + 1) = 5 output signals.

The correlation performed by the user interface 104 includes a modification and a combination. At each of the input points 134 with lattice coordinates (i, j), one input signal $Y_i$ is individually modified depending on the user actuation 136 at the respective input point (and independent of other input points). In the absence of the user actuation 136, the input signal $Y_i$ is unaltered. The correspondingly modified or unaltered input signals $Y_i$ associated to the same output signal $X_j$ are combined. The output signal $X_j$ is a result of the combination.

In a digital variant, the input signals $Y_i$ generated by the pattern generator 102 are digital signals and the user interface 104 is adapted to logically invert the corresponding one of the input signals $Y_i$ in response to the user actuation 136. Each of the input signals $Y_i$ is a bit value (0 or 1) and the user actuation 136 modifies the input signal $Y_i$ according to a logical bit-wise exclusive disjunction (also referred to as an "exclusive or" or XOR-operation). The combination is also a logical bit-wise exclusive disjunction. In a further variant, at least one of the modification (of the input signals $Y_i$ in response to the user input) and the combination (resulting in the output signals $X_j$) uses a logical bit-wise conjunction (also referred to as "AND").

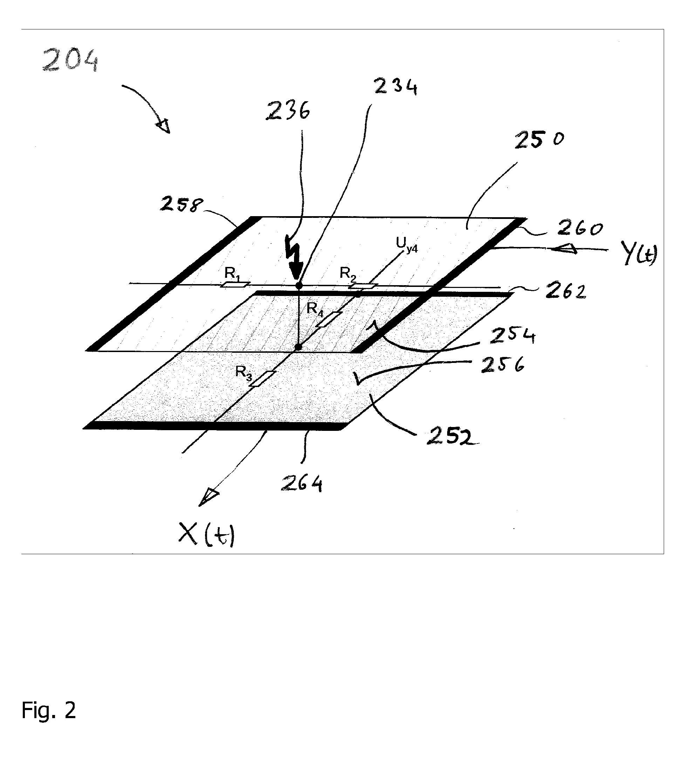

In a analog variant, the pattern generator 102 generates analog signals $Y_i$ and the user interface 104 is adapted to modify the input signals $Y_i$ in response to the user actuation 136 in the analog domain. The user input field 128 comprises a pair of resistive foils as is described in more detail with reference to Fig. 2 below. In a further analog variant, each input point 134 of the user input field 128 comprises a sensitive capacitive area. The user input field 128 comprises electrodes at each input point 134 on a two or four layer Printed Circuit Board (PBC). The PBC includes an excitation source that provides an excitation signal (at approximately 240 kHz), a transmitting electrode coupled to the excitation source, and a receiving electrode. The excitation signal is modulated by pattern $Y_i$. The signals of the receiving electrodes are combined. The combination provides the output signals $X_j$. In a still further analog variant, the user input field 128 comprises a lattice arrangement of piezo elements. The user input field 128 comprises a piezoelectric foil made of Polyvinylidene Fluoride (PVDF). At each input point 134, a piezoelectric element includes a first metal layer on one side of the PVDF foil and a second metal layer on the other side of the PVDF foil. The input signals $Y_i$ define the voltage applied to the first metal layers. Local pressure of the user actuation 136 modifies a voltage level at the second metal layer according to piezoelectricity, which provides the output signals $X_j$.

The pattern generator 102 is further adapted to permute the order i=0, ..., n of the input signals $Y_i$ as a function of time. The input signals

$$Y_i(t) = Y'_{p[i]}(t)$$

result from a permutation p[i] applied to an (unpermuted) signal $Y'_i$. The permutation varies randomly with time t. A permutation frequency (i.e., a center of a permutation spectrum) of the permutation is higher than a typical or expected frequency of the user actuation 136. Specifically, for the case of a touchpad used as the user interface 104, the permutation frequency is higher than a typical or expected typing frequency of a user.

The user input field 128 further comprises a background illumination. The user input field 128 is transparent in the (visual) spectrum of the background illumination. The background illumination has a spatial resolution equal to or higher than the number of input points 134. The background illumination includes a Liquid Crystal Display (LCD). A user of the device 100 or the device 120 is prompted via the LCD to input a gesture on the user input field 128. The gesture is a movement of one or more fingers touching or slidingly contacting the user input field 128. The gesture is represented by a spatiotemporal sequence of input points 134. In other words, the sequence of input points 134 traces one or more curves on the user input field 128. Time stamps are associated to each of the user actuations 136 and for each of the input points 134 on the one or more curves. The sequence thus includes a temporal or dynamic component of the gesture.

In a preferred embodiment, the gesture is a cursive or handwriting of a character, such as a single digit. The gesture further includes a starting point in time defined by the first user actuation 136 (which follows the user prompt). The gesture further includes an endpoint in time defined by a single tip on the user input field 128. As to a temporal order, the tip (as a sign for completion of the user input) follows directly upon a continuous curve (as user identification in the user input). As to a relative spatial arrangement on the user input field 128, the tip is arranged in a lower right corner of a rectangle enclosing the continuous curve. The tip triggers the transmission of the output signals $X_0$, $X_1$, ..., $X_m$.

At the time of the user input, the LCD is switched off, shows a uniform background color, or an arbitrary background image that is unrelated to the gesture input by the user. The background illumination is unrelated to an expected input by the user. Alternatively, the background display generates an array of fields, each field corresponding to one of the input points 134.

For a remote user identification, the device 110 receives the output signals $X_0$, $X_1$, ..., $X_m$. The received signals are the result of the pattern generated and correlated with the modifying gesture at the device 100. The decorrelator 112 performs a decorrelation of the received signal $X_0$, $X_1$, ..., $X_m$ by correlating the received signal and the inverted pattern ($\neg Y_0$, $\neg Y_1$, ..., $\neg Y_n$). In the case of a modification of the pattern according to a logical bit-wise exclusive disjunction, the inverter 114 can be omitted and the generated pattern is directly applied to the received signal according to the logical bit-wise disjunction. In the case of a correlation in the analog domain based on an addition or a multiplication of the pattern and the user input, the inverter 114 provides to the decorrelator 112 negative input signals ($-Y_0$, $-Y_1$, ..., $-Y_n$) or inverse input signals ($1/Y_0$, $1/Y_1$, ..., $1/Y_n$), respectively.

The information about the user input is enveloped in noise by the correlation. For a third party analyzing the correlation result by itself, the correlation result is just noise. Entropy is a measure for the quality of the noise or random pattern. The less predictable the generated random pattern for an unbiased third party, the higher is the quality of the generated pattern. The correlation changes the generated pattern such that the result of the correlation depends on both the generated pattern and the user input. As a consequence of the dual dependence, the result of the correlation is also "random" for an unbiased third party. Here, unbiased means the absence of knowledge as to the generated pattern.

Entropy may have an absolute value. For example, $N \cdot \log 2$ may be a maximum entropy for an unknown string of N bits. A normalized entropy may be the entropy devided by a maximum entropy. The normalized entropy of each of the input signal Y(t) and the output signal X(t) is one (1) for an ideal pattern generator 102 providing a perfect random pattern. In real-world implementations, the normalized entropy, H, approximates one (1) from below for an excellent pattern generator 102. Symbolically, H<1 and H≈1. A measure for the entanglement of the input signal Y(t) and the output signal X(t) is their cross-entropy. In the absence on a user input, the output signal X(t) equals the input signal Y(t). The normalized cross-entropy of the input signal Y(t) and the output signal X(t) thus approximates one (1), if there is no input and no perturbation. When the input signal Y(t) is inverted by the inverter 114, or stored inverted in a database, the cross-entropy between the inverted input signal, $\neg Y(t)$, and the output signal, X(t), approximates zero (0) from above, if there is no input and no perturbation. Symbolically, H>0 and H≈O.

When the output signal X(t) includes a message, such as the user input, it is the result of a correlation between the message and the input signal Y(t). The normalized cross-entropy, H, of the signals X(t) and $\neg Y(t)$ is significantly positive, H > 0. The cross-entropy still tends to zero. I.e., the cross-entropy is small compared to one (1), because the changes to the generated pattern due to the user input are small. In other words, the generated pattern dominates the correlation result.

Authentication is based on the cross-entropy. The information of the user input is included in the correlation (or cross-correlation) of the signals X(t) and Y(t). This is why the decorrelation (e.g., the correlation of the signals X and $\neg Y$) restores the user input. Summing up the correlation over all signal components yields a single number value. The summed-up correlation may be normalized by dividing by each of the root mean square of the input signal Y and the output signal X. Symbolically, the summed correlation is divided by sqrt($<X^2> \cdot <Y^2>$). The normalized correlation, C, is equal to one (1) for an ideal communication. In a real-world implementation, the normalized correlation approximates one (1) from below. A significant deviation from one (1) may indicate a man-in-the-middle attack or any other form of active or passive eavesdropping.

The decorrelator 112 outputs a decorrelated user input 138 for further processing. A decision upon the remote user identification is based on the decorrelated user input 138. The further processing includes a pattern recognition. The pattern recognition depends on all the degrees of freedom. The user is successfully identified, if the decorrelated user input 138 and an expected user input match.

A result of the pattern recognition is invariant under at least one of translation, rotation, scaling and linear stretching (i.e., dilation). The matrix tessellation is beneficial for a hardware implementation of the translation invariance. The pattern recognition includes a Fourier transform performed by the device 110 for a translationally invariant reconstruction of the user input. The tessellation in a manner of polar coordinates is beneficial for a hardware implementation of the rotation invariance and the scaling invariance. Invariance with respect to scaling means that the decorrelated user input 138 matches the expected user input up to multiplication of the radius, r, by a positive scaling factor. Invariance with respect to rotation means that the decorrelated user input 138 matches the expected user input up to addition or subtraction of an offset in phi.

An enhanced embodiment of each of the devices 100, 110, 120 allows for communication in a direction opposite to the signal transmission. The device 110 comprises a transmitter, and the device 100 comprises a receiver. A challenge message is transmitted from the device 110 to the device 100, or internally communicated in the device 120. The user prompt shown on the LCD of the device 100 includes a content of the challenge message received from the device 110 or internally communicated in the device 120. The user prompt shown on the LCD of the user input field 128 is a "challenge" (in the terminology of computer security) posed by the device 110 to the user of the device 100. The user input at the device 100 is a "response" to the challenge. Accordingly, the devices 100 and 110, or the device 120, provide a challenge-response authentication.

The correlation performed by the user interface 104 of the input signals $Y_i$ and the user input is symbolically represented by:

$$X_j = \Sigma_i \, OP_{ji}(Y_i),$$

wherein the operation $OP_{ji}$ represents the presence of the user actuation 136

$$OP_{ji}(Y_i) = \overline{Y}_i$$

or the absence of the user actuation 136

$$OP_{ji}(Y_i) = Y_i$$

at the input point 134 indicated by the pair (i, j). The summation (denoted by "$\Sigma_i$") over the index i (with i = 0, ..., n) combines input signals $Y_i$ modified by the user actuation 136 (denoted "$\overline{Y}_i$") and unaltered input signals $Y_i$.

The decorrelator 112 performs a decorrelation that is symbolically represented by

$$UA_{ij} = decor[\, Y_i(t_0), Y_i(t_1), ..., Y_i(t_e); X_j(t_0), X_j(t_1), ..., X_j(t_e) \,],$$

wherein the decorrelation (denoted by "decor") is based on a temporal sequence of the input signals $Y_i$ over a discretized time interval (t = to, ..., $t_e$), and on a temporal sequence of the correlation result represented by the received signal $X_j$ over the corresponding discretized time interval. The resulting matrix $UA_{ij}$ represents the presence or the absence of the user actuation 136 for each of the input points 134 indicated by the pair (i, j).

It is emphasized that the signal $X_j(t)$ is random, i.e., white noise, to a third party not in possession of the originally generated pattern $Y_i(t)$. The information representing the user input, such as the gesture, is only encoded in a cross-correlation of the originally generated pattern Yi and the output signals Xj transmitted from the device 100 to the device 110. While the user input is represented by the cross-correlation, the correctness of the transmission is indicated by the cross-entropy of the transmitted output signals $X_j(t)$. For the pattern being generated with entropy equal to one, a cross-entropy significantly deviating from one indicates an attack on the transmitted or internally communicated signals (i.e., on the transmission channel or communication line, respectively). Analysis of the cross-entropy in the device 110 or the device 120 may thus thwart or prevent a man-in-the-middle attack.

In a further embodiment of each of the devices 100 and 110, the device 100 comprises a further transmitter 140 adapted to transmit the pattern represented by the output signals $Y_0$, $Y_1$, ..., $Y_n$ via a secure communication network 142. The device 110 comprises a further receiver 144 adapted to receive the output signals $Y_0$, $Y_1$, ..., $Y_n$ representing the pattern.

In a still further embodiment of each of the devices 100 and 110, an initial parameter of the pattern generator 102 is exchanged. In the case of a Pseudo-Random Number Generator (PRNG), the initial parameter includes a seed of the PRNG. The initial parameter is preferably exchanged via the communication channel 106, 116, 108, or the further communication channel, 140, 142, 144. The exchanged initial parameter is used to initialize the pattern generator 102, such that each of the devices 100 and 110 generates the same pattern (applied to the user interface 104 and to the decorrelator 112, respectively). A transmission of the pattern via a secure channel is beneficial for a pattern generator 102 that generates a true random pattern (or any other pattern that cannot be simulated or algorithmically reproduced).

In a still further embodiment of each of the devices 100, 110, 120, the generator 102 comprises a database.

The database includes non-volatile memory, such as Electrically Erasable Programmable Read-Only Memory (EEPROM, preferably flash memory) or Read-Only Memory (ROM). The database is configured to store a pre-defined plurality of the patterns. Each of the stored patterns is comprised in a record of the database. A number of the pre-defined plurality of the patterns is 1000, 2000, or more. The database is indexed. An index value is associated to each of the plurality of the pattern stored in the database. The generator 102 generates a pattern based on the index value. Generating the pattern includes subsequently reading patterns stored in the database. The index value is unique. For each index value, there is no more than one pattern stored in the database, to which the index value is associated. The index value is an integer value. The patterns are read from the database in the order of the index. The index values are associated randomly to the stored patterns. I.e., the index values are random with respect to a physical order of the stored patterns or a logical address of the stored patterns. Upon reading the stored patterns in the order prescribed by the index value, the pattern generator 102 apparently reads from the database in a random mannor. The usage of the database may significantly reduce computational requirements for the pattern generation.

Regarding each of the devices 100 and 110, an initial index value of the database is exchanged. The initial index value is preferably exchanged via the communication channel 106, 116, 108, or the further communication channel, 140, 142, 144. The pattern generator 102 in each of the devices 100 and 110 retrieves the pattern based on the initial index value and increments the index value by one. Alternatively or in addition, a current index value is communicated. The current index value is commuicated along with the transmission or reception of the correlation result. The communication of the index (instead of the pattern) may significantly reduce a data transfer rate of the communication. Furthermore, the data transfer rate may be independent of the complexity or size of the pattern. Security requirements for a channel of the communication may be relaxed when communicating the random index value. Preferably, each of the devices is manufactured and shipped to a customer, wherein the patterns are not yet stored in the respective database. The customer may, at her own discretion, add, change or update the database in a pair of the devices 100 and 110.

The devices 120 may further comprise a pair of a first database and a second database. Each of the devices 100 and 110 may comprise a first database and a second database, respectively. Corresponding patterns are stored in each of the first database and the second database. The corresponding patterns are associated to the same index value. The first database provides the generated pattern to the user interface 104. The second database provides the generated pattern to the decorrelator 112. More specifically, each of the patterns store in the second database is inverted with respect to the corresponding pattern stored in the first database. The inverter 114 may be omitted. The coincidence of a matching pair of first and second database may serve as an indicator of identification. In conjunction with a successful decorrelation, authentication may be implied.

The pattern provided to the user interface 104 and to the decorrelator 112 correspond to each other. The term "corresponding patterns" encompasses equivalent patterns, inverted patterns, and related patterns. Related patterns differ by an additional parameter.

An example for the generation of related patterns is described in what follows. The related patterns are generated synchronously by the pattern generator 102. In the device 100, the related patterns are input to the user interface 104 and the transmitter 140, respectively. In the device 110, the related patterns are received by the receiver 144 as a basis underlying the correlation signal received by the receiver 126. In the device 120, the related patterns are input to the user interface 104 and the decorrelator 112, respectively. The pattern, which is input to the user interface 104 as basis for the correlation, is represented by at least one complex number $z$. The other related pattern is represented by the complex number $1/z$. Geometrically, the related patterns, as represented by $z$ and $1/z$, are antipodes on the Riemann sphere. The pattern is generated by drawing a random complex number $z$ from an equal distribution on the upper hemisphere, i.e. $|z|>1$. The additional parameter is a phase, rho, which is introduced by multiplying a phase factor, $\exp(i \cdot rho)$, to the representation $1/z$ of the related pattern. The signal received by the receiver 114 is thus represented by $\exp(i \cdot rho)/z$. The additional parameter, rho, is a further random or algorithmically derived parameter. More generally, any holomorphic function, $f(z; rho_1, rho_2, ...)$, with parameters $rho_k$ may be applied to generate the related patterns represented by $z$ and $f(z; rho_1, rho_2, ...)$, respectively. Related patterns have been described above by applying the generated pattern represented by $z$ to the user interface 104 in the device 100 and transmitting the related pattern $f(z; rho_1, rho_2, ...)$ to the device 110. In a variant, the pattern represented by $z$ is transmitted and the correlation is based on $f(z; rho_1, rho_2, ...)$.

Each of the transmitter 106 and the receiver 108 preferably comprise a Universal Serial Bus (USB) interface. Alternatively or in addition, a variation includes an IEEE 802.3 interface (also referred to as wired ethernet interface), an IEEE 1394 interface (also referred to as "FireWire" interface), an IEEE 802.11 interface (and further interfaces collectively referred to as "Wi-Fi"), or a mobile telecommunication interface according to the third or fourth generation (also referred to as "3G" and "4G").

Fig. 2 schematically illustrates a further user interface 204. The user interface 204 can substitute or supplement the user interface 104 in a second embodiment of each of the devices 100, 110, 120. By example, the user interface 204 also transparent, which allows for the background illumination. Like reference signs (of the form 1 xy and 2xy in Figs. 1 and 2, respectively) refer to alternative or additional features. While the user interface 104 correlates a spatially discretized series of input signals $Y_0$, $Y_1$, ..., $Y_n$ in the first direction (according to a two-dimensional user input) and outputs a specially discretized series of output signals $X_0$, $X_1$, ..., $X_m$ in the second direction, the user interface 204 performs an analog correlation that is continuous in the first direction and the second direction. As to the second embodiment of the devices 110 and 120, a decorrelator 112 (of the device 110 or the device 120) computes the corresponding decorrelation by means of a floating-point representation of the signals.

The user interface 204 comprises a pair of resistive foils 250 and 252. Each of the resistive foils 250 and 252 comprises on one side a Transparent Conducting Oxide (TCO) layer 254 and 256, respectively. The TCO layers 254 and 256 face each other. Each of the resistive foils 250 and 252 comprises a pair of parallel contacting lines 258, 260 and 262, 264, respectively. Furthermore, each of the resistive foils 250 and 252 provides an essentially linear increase in electrical resistance between any point of the respective TCO layer 254 or 256 and one of the respective contacting lines 258, 260, 262, 264 as a function of distance. A first contacting line 258 and 262 of each of the resistive foils 250 and 252 is grounded. The other second contacting line 260 of the resistive foil 250 is coupled to the pattern generator 102. The pattern is represented by an analog signal $Y(t)$ applied to the contacting line 260.

An absolute value of electrical resistance between the first contacting line 258 (or 262) and the second contacting line 260 (or 264, respectively) provides a single number value as the unique characteristic of the individual foil 250 or 252, respectively. The electrical resistance value is also communicated from the device 100 to the device 110, and used in the device 120, in order to uniquely identify the user interface 104.

Resistivity on a surface of the foils 250 and 252 is further subject to local variations. More specifically, each foil is uniquely individualized by a surface pattern of deviations from the ideal linear change of resistance across the surface. The local resistivity pattern leads effectively to a distortion of the user input curve represented by the sequence of points. Reminiscent of a watermark, the unique surface pattern is thus included in the correlation result of the use interface 204.

A number of user actuation points 234 is (theoretically) infinite due to the continuous and essentially linear increase in resistance along the first direction and the second direction in the TCO layers 154 and 156, respectively. Upon a user actuation 236 on an input point 234, an output signal $X(t)$ is generated on the other second contacting line 264 of the resistive foil 252. Each of the resistive foils 250 and 252 is a voltage divider in the second direction and the first direction, respectively. As the voltage division depends on the input point 234 of the input point 234 of the user actuation 236, the output signal $X(t)$ is a correlation result of a correlation between the input signal $Y(t)$ and the user actuation 136. It is noted that the correlation according to the user interface 204 is a correlation in the analog domain as it is based on the physical process of voltage division. The correlation occurs directly during the user input.

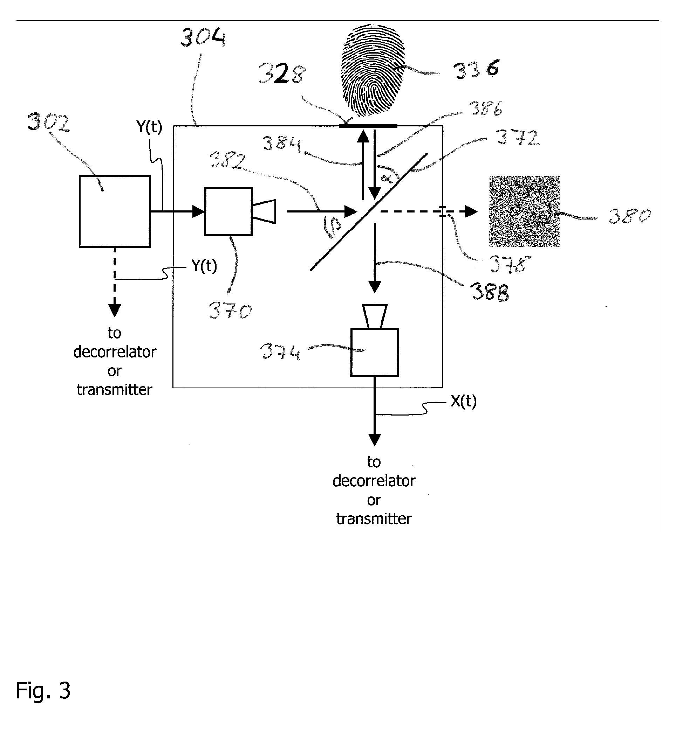

As a third embodiment, Fig. 3 schematically illustrates a portion of the devices 100 and 120 for user identification. Each of a pattern generator 302 and a user interface 304 can substitute or supplement corresponding features (having like reference signs of the form 1 xy and 2xy in Figs. 1 and 2, respectively).

The user interface 304 allows to base, or complement, the user identification on biometry. While the third embodiment is described including a contact surface 328 configured to receive a fingerprint as user input 336, other physiological or biometric characteristics (which include facial, iris or retina characteristics) function as the user input in a variant of the third embodiment.

The user interface 304 comprises a projector 370, a beam splitter 372, a camera 374 and the contact surface 328. Optionally, the user interface 304 further comprises an optics outlet 378 providing the generated pattern as an optical reference 380 for the decorrelation. The camera 374 is arranged to face the contact surface 328. The camera 374 comprises a Charged-Coupled Device (CCD) chip and a camera optics. The camera optics is adapted to images the contact surface 328 onto a photosensitive surface of the CCD chip. The beam splitter 372 is positioned on a first optical path between the camera 374 and the contact surface 328. The beam splitter 372 encloses an angle alpha of 45 ° with the first optical path.

The projector 370 is adapted to receive a signal $Y(t)$ representing the pattern as a two-dimensional video image. The projector 370 comprises a micromirror chip controlled by the signal $Y(t)$ and a light source providing a luminous flux. The micromirror chip modulates the luminous flux according to the signal $Y(t)$ so as to encode the pattern in the light. The projector 370 further comprises projector optics configured to project the light pattern on a second optical path 382. A surface of the micromirror chip coincides with a rear focal plane of the projector optics.

The beam splitter 372 is further positioned on the second optical path 382 (between the projector 370 and the optional optics outlet 378). The beam splitter 372 encloses an angle beta of 45°with the second optical path, which is perpendicular to the first optical path.

A pattern generator 302 is coupled to the projector 370. As described above with reference to the device 120, the pattern generator 302 optionally comprises a second output coupled to the decorrelator 112. As described above with reference to the devices 100 and 110, the optional second output is coupled to the further communication channel 140, 142, 144 in a variant of the devices 100 and 110.

The pattern is partially reflected by the beam splitter 372 from the second optical path 382 into an outward direction 384 on the first optical path. The biometric characteristic of the user input 336, which is a surface structure of the epidermis of a user finger in the scenario of Fig. 3, is illuminated by the projected pattern. Light scatters back from the illuminated surface structure. The backscattered light partially reenters the contact surface 328 in an inward direction 386 on the first optical path. The backscattered light partially passes through the beam splitter 372 in a direction 388 towards the camera 374 on the first optical path. The camera 374 captures the backscattered light and outputs the output signal X(t).

Accordingly, the output signal X(t) provides a real-time representation of the light scattered from the user input 336. The camera 374 resolves the biometric characteristics of the user input 336, which is correlated with the pattern used to illuminate the characteristics of the user input 336. A fingerprint surface structure of skin includes epidermal ridges and recesses. The ridges provide lines of high reflectance or backscatter at the contact surface 328. The recesses act as a beam trap for the projected pattern. Consequently, the fingerprint characteristics as the user input 336 is correlated with the pattern projected thereon. The correlation is a multiplication. A local amplitude or intensity of the pattern projected at the contact surface 328 is multiplied by a local reflectivity. Since the local reflectivity represents the biometric characteristic of the user input 336, the pattern and the user input 336 are directly correlated. It is noted that the correlation is a physical process, namely optical reflectance. Furthermore, the correlation (i.e. the direct interaction between the projected light and the user input 336) occurs outside the devices 100 and 120, namely at the contact surface 328. Therefore, the correlation cannot be subject to software manipulation or hardware manipulation in the devices 100, 110, 120. Moreover, the user input does not enter the devices 100, 110, 120 as "plaintext", i.e. in an uncorrelated form.

A transfer function of the CCD chip is a characteristic that individualizes the user interface 304. In addition, each of the optics may be subject to at least one of spherical and chromatic aberrations that individualize the user interface 304. Each of the characteristics directly influences the correlation result of the user interface 304. Consequently, the characteristics are encoded into the correlation result.

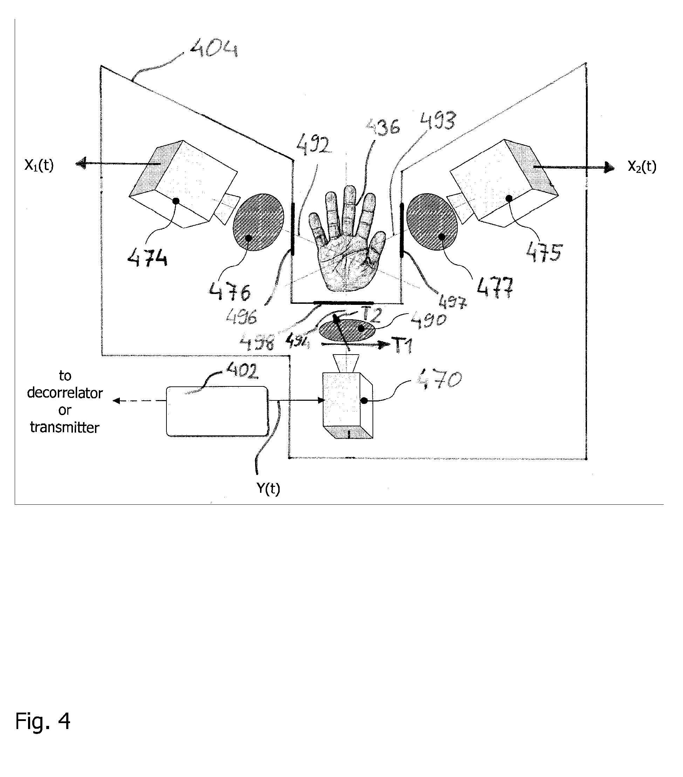

Fig. 4 schematically illustrates a portion of the devices 100 and 120 for user identification. In a fourth embodiment of the devices 100, 110, 120, each of a pattern generator 402 and a user interface 404 can substitute or supplement any of the aforementioned features. The user interface 404 comprises a projector 470, a first camera 474 and a second camera 475. The projector 470 is similar to the projector 370, and each of the cameras 474 and 475 is similar to the camera 374, as described above. The camera optics of each of the cameras 474 and 475, and the projector optics of the projector 470, further include a polarization filter 476, 477 and 490, respectively. A first camera axis 492, a second camera axis 493, and a projector axis 494 are directed towards apertures 496, 497, 498, respectively.

A pattern generator 402 is coupled to projector 470. The projector emits the pattern along the projector axis 494 towards the user input 436, which is the right hand of the user in the scenario shown in Fig. 4.

The polarization filter 490 is rotatable by 90° about the projection axis 494 between a vertical position and a horizontal position. While the projector 470 generates a projection with equal distribution of polarization, a polarization state of the projected pattern on the projection axis is filtered out by the polarization filter 490. As an additional degree of freedom, the projected pattern has the polarization state defined by an angular position of the polarization filter 490 between the vertical position and the horizontal position.

The polarization filter 476 and 477 have a fixed angular position about the camera axes 492 and 493, respectively. Light projected with the horizontal polarization state is transmitted by the polarization filter 476 of the first camera 474. Light projected with the vertical polarization state is absorbed by the polarization filter 476 of the first camera 474. Complementarily, light projected with the vertical polarization state is transmitted by the polarization filter 477 of the second camera 475. Light projected with the horizontal polarization state is absorbed by the polarization filter 477 of the second camera 475.

The correlation is the direct interaction of the user input 436 and the pattern projected thereon. As the projected pattern includes the polarization state, the correlation includes changes of the projected polarization state depending on the surface structure of the user input 436 (in addition to the correlation of the amplitude or intensity). In other words, the pattern includes the polarization state as an additional degree of freedom, and the correlation includes a correlation between user input 436 and the polarization state of the pattern.

The first camera 474 and the second camera 475 provide a pair of output signals $X_1(t)$, $X_2(t)$, which represents a result of the correlation. The output signals $X_1(t)$, $X_2(t)$ are processed as described above.

In an enhanced variant of the fourth embodiment, the polarization filter 490 is configured to define the polarization state of the projected pattern as a function of a first transversal direction T1 and a second transversal direction T2. The polarization state of the polarization filter 490 is controlled by the pattern generator 402. The pattern is thus encoded in the light projected towards the user with regard to amplitude and polarization. In a still further variant of each of the third and the fourth embodiment, the respective projector 370 or 470 modulates the phase of the light projected towards the user according to the pattern generated. Accordingly, a number of degrees of freedom for the encoded pattern is further increased, which number exponentially decreases chances of an unintentional decorrelation.

Each of the aforementioned embodiments is enclosed in a housing. The housing is made from aluminum. The housing comprises an upper shell and a subshell. The upper shell has an opening to receive, support or otherwise allow for one or more of the user interfaces 104, 204, 304 and 404. The housing has an inner surface with a layer structure in each of the upper shell and the subshell. The layer structure comprises, in an order from the housing shell towards the inside of the housing, (i) a first insulating layer, (ii) an inner shielding layer, (iii) a second insulating layer, and (iv) an intrusion detecting foil.

The first insulating layer electrically isolates the inner shielding layer from the housing. The inner shielding layer is made from an alloy of nickel and chromium. The inner shielding layer is ferromagnetic. The second insulating layer provides electrical insulation against the intrusion detecting foil.

The intrusion detecting foil may be a touch foil. In one variant, the intrusion detecting foil is a capacitive touch foil. In a second variant, the intrusion detecting foil is a resistive touch foil. The resistive touch foil comprises an outer Transparent Conductive Oxide (TCO) foil and an inner TCO foil. In the absence of an intrusion, the outer TCO foil and the inner TCO foil are spaced apart from another. In the event of an intrusion (or an intrusion attempt) through the housing, the outer TCO foil is locally deformed so as to contact the inner TCO foil. The outer TCO foil contacts the inner TCO foil at least locally. The intrusion detecting foil is configured to provide a signal indicative of the location of the intrusion. One or more of configuration, electrical connectivity, and operation of the resistive touch foil is analogous to the pair of resistive foils 250 and 252 described above.

The inner TCO foil may have a pair of essentially parallel first edges. The outer TCO foil may have a pair of essentially parallel second edges. One of the first edges and one of the second edges may be grounded. The other one of the first edges may be connected to the pattern generator 102, 302 or 402. As to the device 100, the other one of the second edges is connected to the transmitter 106. As to the device 120, the other one of the second edges is connected to the decorrelator 112.

The connection of the first edge preferably involves a demultiplexer. The demultiplexer may be connected to the pattern generator 102, 302 or 402 and demultiplex the pattern to the user interface 104, 204, 304 or 404 and to the intrusion detecting foil. The pattern generator 102, 302 or 402 thus may be shared for both user identification and intrusion detection.

The connection of the second edge preferably involves a multiplexer. The multiplexer is connected to at least one of the transmitter 106 and the decorrelator 112. The multiplexer is adapted to multiplex the output signals of both the user interface 104, 204, 304 or 404 and the intrusion detecting foil. Multiplexing is synchronous to demultiplexing. At least one of the transmitter 106 and the decorrelator 112 thus may be shared for both user identification and intrusion detection.

As has become apparent from the above description of preferred embodiments, a correlation between a pattern and a user input may provide for a mechanism of local or remote user identification and user authentication based on existing computational and communication infrastructure. The "identification" may answer the question of: "Who is the user?" The authentication may answer the question of: "Is a message or communication unaltered, or had it been tampered with?" By transmitting a characteristic that individualizes a user interface or by including in the correlation the individualizing characteristic, a degree of certainty of the identification and/or authentication may be significantly increased.

The user input may be shielded and/or may be inaccessible to a third party with a significantly increased degree of security by directly correlating the user input and a pattern, which normalized entropy is essentially equal to one.

It is believed that many advantages of the present invention will be fully understood from the foregoing description, and it will be apparent that various changes may be made in the form, construction and arrangement of the exemplary aspects thereof without departing from the scope of the invention or without sacrificing all of its advantages. Because the invention can be varied in many ways, it will be recognized that the invention should be limited only by the scope of the following claims.

**Claims**

1. A device (100) for user identification based on a user input, the device comprising

   - a pattern generator (102; 302; 402) adapted to generate a pattern ($Y_0$, $Y_1$, ..., $Y_n$; $Y(t)$);
   - a user interface (104; 204; 304; 404) adapted to correlate the pattern and the user input (136; 236; 336; 436); and
   - a transmitter (106) adapted to transmit a signal ($X_0$, $X_1$, ... $X_m$; $X(t)$; $X_1(t)$, $X_2(t)$) indicative of a result of the correlation to a receiver (108).

2. The device of claim 1, wherein the pattern and the user input are correlated in the analog domain.

3. The device of claim 1 or 2, wherein the pattern and the user input are correlated by means of a physical process.

4. The device of any one of the previous claims, wherein the correlation is an exclusive disjunction (XOR) or a conjunction (AND).

5. The device of any one of the previous claims, wherein the pattern is generated using an algorithm, and the receiver (108; 110) is adapted to perform the same algorithm.

6. The device of any one of the previous claims, wherein the user interface (104; 204) comprises a touchpad and the user input includes a gesture on the touchpad.

7. The device of claim 6, wherein the touchpad comprises a user input field (128) having a first edge (130) and a second edge (132), and the touchpad is adapted to correlate a plurality of input signals on the first edge (130) representing the pattern with the gesture on the user input field (128) and to output a plurality of output signals on the second edge (132) representing the result of the correlation.

8. The device of claim 6 or 7, wherein the touchpad is a resistive touchpad and the pattern is correlated with the gesture by means of voltage division.

9. The device of any one of the previous claims, wherein the user interface (304; 404) comprises a projector (370; 470) adapted to project the pattern towards a user and a camera (374; 474, 475) adapted to detect light (386) induced by the projected pattern.

10. The device of any one of the previous claims, wherein a manufacturing characteristic of the user interface introduces a watermark in the correlation that is unique to the user interface.

11. A device (110) for user identification based on a user input, the device comprising

- a pattern generator (102; 302; 402) adapted to generate a pattern ($Y_0$, $Y_1$, ..., $Y_n$; $Y(t)$);
- a receiver (108) adapted to receive a signal ($X_0$, $X_1$, ... $X_m$; $X(t)$; $X_1(t)$, $X_2(t)$) indicative of a result of a correlation based on the user input (136; 236; 336; 436); and
- a decorrelator (112) adapted to decorrelate the signal using the pattern to retrieve the user input.

12. The device of claim 11, wherein the receiver is further adapted to receive a parameter of the pattern generation over a more secure channel.

13. The device of claim 11 or 12, wherein the signal and the pattern are decorrelated according to a physical process.

14. A device (120) for user identification based on a user input, the device comprising

- a pattern generator (102; 302; 402) adapted to generate a pattern ($Y_0$, $Y_1$, ..., $Y_n$; $Y(t)$);
- a user interface (104; 204; 304; 404) adapted to correlate the pattern and the user input (136; 236; 336; 436); and
- a decorrelator (112) adapted to decorrelate a result ($X_0$, $X_1$, ... $X_m$; $X(t)$; $X_1(t)$, $X_2(t)$) of the correlation using the pattern to retrieve the user input.

15. The device of any one of the previous claims, further comprising a housing, which interior surface is completely covered by one or more intrusion detecting foils.

16. The device of claim 15, wherein one or each of the one or more intrusion detecting foils has a first edge and a second edge, and wherein the first edge is connected to the pattern generator (102; 302; 402) and the second edge is connected to at least one of the transmitter (106) and the decorrelator (112).

Fig. 1

Fig. 2

Fig. 3

X₁(t) ← ... X₂(t) →

404
492
436
493
474
475
476
477
496
497
490
438
494
T2
T1
402
470
to decorrelator or transmitter
Y(t)

Fig. 4

Europäisches
Patentamt

European
Patent Office

Office européen
des brevets

## EUROPEAN SEARCH REPORT

**Application Number**

EP 11 17 2483

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/064711 A1 (FERNANDO LLAVANYA [US] ET AL) 1 April 2004 (2004-04-01) * abstract; figures * * paragraphs [0015], [0017], [0019] * * paragraphs [0024] - [0033] * ----- | 1-8, 10-14 | INV. G07C9/00 G06F21/00 ADD. G06K9/00 G06F3/041 |
| X | US 2006/285726 A1 (AOKI TAKAHIRO [JP] ET AL) 21 December 2006 (2006-12-21) * abstract; figures 2,4,5,6,9,10,11,13 * * paragraph [0011] * * paragraphs [0058] - [0068], [0072] - [0073] * * paragraphs [0078] - [0082] * * paragraphs [0086] - [0087] * * paragraphs [0090] - [0091], [0096] * ----- | 1-5, 9-11,14 | |
| X | US 2002/075241 A1 (JUNGHANS DAVID RICHARD [US]) 20 June 2002 (2002-06-20) * abstract; figures * * paragraphs [0003], [0004] * ----- | 1-8, 10-14 | |
| X | US 2006/136743 A1 (POLCHA ANDREW J [US] ET AL) 22 June 2006 (2006-06-22) * abstract; figures * * paragraphs [0036] - [0038] * * paragraphs [0050], [0055], [0057], [0060] * ----- | 1-4,9, 11-14 | TECHNICAL FIELDS SEARCHED (IPC) G07C G06K H04L G06F |

The present search report has been drawn up for all claims

| Place of search | Date of completion of the search | Examiner |
|---|---|---|
| The Hague | 25 November 2011 | Buron, Emmanuel |

EPO FORM 1503 03.82 (P04C01)

**ANNEX TO THE EUROPEAN SEARCH REPORT**
**ON EUROPEAN PATENT APPLICATION NO.**                    EP 11 17 2483

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2011

| Patent document cited in search report | | Publication date | Patent family member(s) | | Publication date |
|---|---|---|---|---|---|
| US 2004064711 | A1 | 01-04-2004 | US 2004064711 A1<br>US 2008232600 A1 | | 01-04-2004<br>25-09-2008 |
| US 2006285726 | A1 | 21-12-2006 | JP 2006350886 A<br>US 2006285726 A1 | | 28-12-2006<br>21-12-2006 |
| US 2002075241 | A1 | 20-06-2002 | NONE | | |
| US 2006136743 | A1 | 22-06-2006 | NONE | | |

EPO FORM P0459

For more details about this annex : see Official Journal of the European Patent Office, No. 12/82